# EUROPÄISCHE PATENTSCHRIFT

(11) **EP 1 882 865 B1**
(45) Veröffentlichungstag und Bekanntmachung des Hinweises auf die Patenterteilung: **28.01.2009**
(21) Anmeldenummer: 07012130.6
(22) Anmeldetag: 21.06.2007
(51) Int. Cl.: F16D 25/0638, F16F 15/134

(54) **Kupplungsanordnung für den Antriebsstrang eines Fahrzeugs**
Clutch arrangement for the drivetrain of a vehicle
DIspositif d'embrayage pour la boîte de vitesses d'un véhicule

(30) Priorität: 05.07.2006 DE 102006031036
(43) Veröffentlichungstag der Anmeldung: 30.01.2008
(73) Patentinhaber: ZF Friedrichshafen AG, 88038 Friedrichshafen (DE)
(72) Erfinder: Sudau, Jörg, 97464 Niederwerrn (DE)

(56) Entgegenhaltungen:
- EP-A- 1 174 633
- EP-A- 1 584 830
- EP-A- 1 857 698
- WO-A-20/04083677
- GB-A- 2 312 488

## Beschreibung

Die vorliegende Erfindung betrifft eine Kupplungsanordnung für den Antriebsstrang eines Fahrzeugs, welche ein Gehäuse mit einem Innenraum umfasst, sowie eine erste Gruppe von Reibelementen, die über einen ersten Reibelemententräger mit einem Antriebsorgan, beispielsweise einer Kurbelwelle einer Brennkraftmaschine, zur gemeinsamen Drehung um eine Drehachse gekoppelt oder zu koppeln sind, und eine zweite Gruppe von Reibelementen, die über einen zweiten Reibelemententräger mit einem Abtriebsorgan, beispielsweise einer Getriebeeingangswelle, zu koppeln oder gekoppelt sind. Die Reibelemente der ersten Gruppe von Reibelementen und die Reibelemente der zweiten Gruppe von Reibelementen sind durch eine Anpressanordnung in gegenseitigen Reibeingriff bringbar, um auf diese Art und Weise ein Drehmoment über die Kupplungsanordnung übertragen zu können. Des weiteren ist im Drehmomentübertragungsweg zwischen dem ersten Reibelemententräger und dem damit zu koppelnden Antriebsorgan zumindest eine Torsionsschwingungsdämpferanordnung vorgesehen.

Aus der DE 196 16 329 A1 ist eine derartige Kupplungsanordnung bekannt. Das Gehäuse wird durch eine abtriebsseitige Schwungmasse eines Torsionsschwingungsdämpfers und ein Kupplungsgehäuse gebildet, das an der abtriebsseitigen Schwungmasse relativ drehbar aufgenommen ist, wobei die Relativdrehbarkeit des Kupplungsgehäuses gegenüber der abtriebsseitigen Schwungmasse durch den Verformungsweg von momentenaufnehmenden, Energiespeichern begrenzt ist, die nur bei Einleitung übergroßer Drehmomente wirksam sind. Sowohl an der dem Kupplungsgehäuse zugewandten Seite der abtriebsseitigen Schwungmasse als auch an einer in dem Kupplungsgehäuse aufgenommenen Anpressplatte, die mit einer als Anpressanordnung wirksamen Membranfeder zusammen wirkt, sind Reibflächen vorhanden, die als erste Gruppe von Reibelementen dienen. In dem Gehäuse ist, in einem axial zwischen abtriebsseitiger Schwungmasse und Anpressplatte verbleibenden Innenraum, eine Kupplungsscheibe aufgenommen, die beidseits über Reibbeläge verfügt, die als zweite Gruppe von Reibelementen wirksam sind. Die Kupplungsscheibe steht über eine Nabe mit dem Abtriebsorgan in Drehverbindung.

Zurückkommend auf die abtriebsseitige Schwungmasse, steht diese über eine Torsionsschwingungsdämpferanordnung in Wirkverbindung mit einer antriebsseitigen Schwungmasse, die an dem Antriebsorgan befestigt ist. Die Torsionsschwingungsdämpferanordnung ist ebenso wie die vorgenannten momentenaufnehmenden Energiespeicher antriebsseitig der beiden Gruppen von Reibelementen vorgesehen.

Bei der bekannten Kupplungsvorrichtung steht im Normalfall, also bei Einleitung begrenzter Drehmomente, lediglich die Torsionsschwingungsdämpferanordnung zur Dämpfung eingeleiteter Torsionsschwingungen zur Verfügung, nicht aber die momentenaufnehmenden Energiespeicher. Dementsprechend begrenzt ist das verfügbare Federvolumen zur Dämpfung der Torsionsschwingungen. Im Übrigen ist der die Kupplungsscheibe aufnehmende Innenraum des Gehäuses trocken ausgelegt, so dass auch diesbezüglich keine Verbesserung der Dämpfungseigenschaften besteht.

Aus der EP 1 418 359 A1 ist eine Kupplungsanordnung bekannt, bei welcher der zweite Reibelemententräger über eine zweistufig aufgebaute Torsionsschwingungsdämpferanordnung mit dem Abtriebsorgan gekoppelt ist. Auf diese Art und Weise wird es möglich, in einem Antriebsstrang auftretende oder zu erwartende Schwingungsanregungen wirksamer zu bedämpfen, als dies bei einer einstufig aufgebauten Torsionsschwingungsdämpferanordnung der Fall wäre. Überdies sitzt die Torsionsschwingungsdämpferanordnung, ebenso wie beide Gruppen der Reibelemente, in einem mit Fluid befüllten Innenraum eines Gehäuses. Beide Stufen der Torsionsschwingungsdämpferanordnung sind abtriebsseitig der beiden Gruppen der Reibelemente vorgesehen.

Es ist die Aufgabe der vorliegenden Erfindung, eine Kupplungsanordnung für den Antriebsstrang eines Fahrzeugs vorzusehen, mit welcher ein verbessertes Schwingungsdämpfungsverhalten erzielt werden kann.

Erfindungsgemäß wird diese Aufgabe gelöst durch eine Kupplungsanordnung für den Antriebsstrang eines Fahrzeugs, umfassend ein Gehäuse mit einem Innenraum, eine erste Gruppe von Reibelementen, welche über einen ersten Reibelemententräger mit einem Antriebsorgan zur Drehung um eine Drehachse zu koppeln sind, eine zweite Gruppe von Reibelementen, welche über einen zweiten Reibelemententräger mit einem Abtriebsorgan zu koppeln sind und durch eine Anpressanordnung in Reibeingriff mit den Reibelementen der ersten Gruppe von Reibelementen bringbar sind, ferner umfassend im Drehmomentübertragungsweg zwischen dem ersten Reibelemententräger und dem damit zu koppelnden Antriebsorgan eine erste Torsionsschwingungsdämpferanordnung und im Drehmomentübertragungsweg zwischen dem zweiten Reibelemententräger und dem damit zur koppelnden Abtriebsorgan eine zweite Torsionsschwingungs-dämpferanordnung.

Bei dem erfindungsgemäßen Aufbau wird also im Drehmomentenfluss sowohl vor den beiden Gruppen von Reibelementen als auch nach den beiden Gruppen von Reibelementen jeweils eine Torsionsschwingungsdämpferanordnung angeordnet, was zur Folge hat, dass diese beiden Torsionsschwingungsdämpferanordnungen im Drehmomentübertragungszustand seriell wirksam sind und somit zu einem optimierten Schwingungsdämpfungs- bzw. Schwingungsentkopplungsverhalten führen. Im ausgerückten Zustand der Kupplungsanordnung, also einem Zustand, in welchem im Wesentlichen kein Drehmoment über die Reibelemente übertragen wird, sind die mit dem Ausgangsbereich der ersten Torsionsschwingungsdämpferanordnung gekoppelten Systembereiche der Kupplungsanordnung, im Wesentlichen also der erste Reibelemententräger mit den daran im Wesentlichen drehfest gehaltenen Reibelementen der ersten Gruppe von Reibelementen, als Schwingungsdämpfungsmasse wirksam, was vor allen beim Motorstart bzw. beim Anheben der Drehzahl in den Bereich der Leerlaufdrehzahl hinsichtlich der Dämpfung von Resonanzschwingungen vorteilhaft ist.

Jede der Torsionsschwingungsdämpferanordnungen kann einen Eingangsbereich und einen über eine Dämpferelementenanordnung, beispielsweise mehrere Dämpferfedern, damit zur Drehmomentübertragung gekoppelten Ausgangsbereich umfassen.

Bei einer besonders vorteilhaften Ausgestaltungsform wird vorgeschlagen, dass die zweite Torsionsschwingungsdämpferanordnung innerhalb des Gehäuses angeordnet ist und dass der Eingangsbereich der zweiten Torsionsschwingungsdämpferanordnung den zweiten Reibbelagträger umfasst oder damit verbunden ist und der Ausgangsbereich der zweiten Torsionsschwingungsdämpferanordnung eine Nabe zur Kopplung mit dem Abtriebsorgan umfasst oder damit verbunden ist. Auf diese Art und Weise ist sichergestellt, dass durch Anordnen der zweiten Torsionsschwingungsdämpferanordnung innerhalb des Gehäuses dieser auch in dem das Gehäuse füllenden Fluid angeordnet ist und somit einerseits eine Schmierung für die sich bezüglich einander bewegenden Bauteile vorhanden ist, andererseits auch durch die Bewegung im Fluid Energie dissipiert werden kann.

Bei einem weiteren besonders vorteilhaften Aspekt kann vorgesehen sein, dass die Dämpferelementenanordnung der ersten Torsionsschwingungsdämpferanordnung innerhalb des Gehäuses angeordnet ist. Durch das Anordnen auch der ersten Torsionsschwingungsdämpferanordnung innerhalb des Gehäuses kann der gleiche Effekt erzielt werden, wie vorangehend mit Hinblick auf die zweite Torsionsschwingungsdämpferanordnung dargelegt.

Dabei kann zum Erreichen eines möglichst einfachen Aufbaus das Gehäuse im Wesentlichen den Eingangsbereich der ersten Torsionsschwingungsdämpferanordnung bilden und der erste Reibelemententräger kann in dem Gehäuse bezüglich diesem um die Drehachse drehbar angeordnet sein.

Der Ausgangsbereich der ersten Torsionsschwingungsdämpferanordnung kann den ersten Reibelemententräger umfassen oder damit verbunden sein.

Bei der vorangehend dargelegten Ausgestaltungsform bewegt sich also bei Auftreten von Drehschwingungen der erste Reibelemententräger bezüglich des Gehäuses. Wenn dabei weiterhin die Anpressanordnung ein in dem Gehäuse in Richtung der Drehachse verschiebbar angeordnetes und mit dem Gehäuse um die Drehachse drehbares Anpresselement umfasst, ist es besonders vorteilhaft, wenn dieses Anpresselement die Reibelemente der ersten Gruppe von Reibelementen und die Reibelemente der zweiten Gruppe von Reibelementen über ein Drehentkopplungslager beaufschlagt. Im Einrückzustand einer derartigen Kupplungsanordnung bewegen sich nämlich bei Auftreten von Drehschwingungen die beiden Gruppen von Reibelementen mit den beiden Reibelemententrägern in Umfangsrichtung bezüglich des Gehäuses und mithin auch bezüglich des mit dem Gehäuse drehbaren Anpresselements. Durch das Vorsehen einer Drehentkopplungsfunktion zwischen dem Anpresselement und den Reibelementen wird das Einführen einer Kraft, welche dieser Relativumfangsbewegung entgegenwirkt, so weit als möglich gemindert.

Bei einem alternativen Aufbau wird vorgeschlagen, dass die Dämpferelementenanordnung der ersten Torsionsschwingungsdämpferanordnung außerhalb des Gehäuses angeordnet ist. Der Vorteil dieser Variante ist, dass ein baukastenartiges Zusammenfügen zweier Systembereiche, nämlich der innerhalb des Gehäuses angeordneten Baugruppen der Kupplungsanordnung, insbesondere auch der zweiten Torsionsschwingungsdämpferanordnung, einerseits und der extern bezüglich des Gehäuses angeordneten ersten Torsionsschwingungsdämpferanordnung andererseits, ermöglicht wird. Ferner ist die zwischen den beiden Torsionsschwingungsdämpferanordnungen liegende Masse bzw. das dadurch generierte Massenträgheitsmoment im Rotationszustand vergleichsweise groß. Auch kann die vorangehend angesprochene Relativbewegung zwischen dem Anpresselement und den Reibelementen vermieden werden, wenn das Anpresselement mit dem Gehäuse drehbar ist.

Beispielsweise kann vorgesehen sein, dass der Eingangsbereich der ersten Torsionsschwingungsdämpferanordnung mit dem Antriebsorgan über eine scheibenartige Kopplungsanordnung zu koppeln ist. Der Ausgangsbereich der ersten Torsionsschwingungsdämpferanordnung kann das Gehäuse umfassen oder damit verbunden sein.

Da bei dieser Ausgestaltungsform die durch das Einleiten von unter Druck stehendem Fluid in das Gehäuse zwangsweise entstehende Axialkraft möglicherweise über die erste Torsionsschwingungsdämpferanordnung abgestützt bzw. abzustützen ist, wird weiter vorgeschlagen, dass zwischen dem Eingangsbereich der ersten Torsionsschwingungsdämpferanordnung und dem Ausgangsbereich der ersten Torsionsschwingungsdämpferanordnung oder/und dem Gehäuse ein im Wesentlichen in axialer Richtung wirksames Vorspannelement angeordnet ist. Auf diese Art und Weise kann eine Entlastung der ersten Torsionsschwingungsdämpferanordnung in axialer Richtung erlangt werden.

Das Gehäuse kann bei dieser Ausgestaltungsvariante den ersten Reibelemententräger bilden. Der vorangehend angesprochene Aspekt des baukastenartigen Zusammenfügens von Systembereichen kann dadurch noch weiter genutzt werden, dass die erste Torsionsschwingungsdämpferanordnung ein Zweimassenschwungrad umfasst mit einer mit dem Antriebsorgan zu koppelnden Primärseite und einer mit dem Gehäuse verbundenen Sekundärseite. Sowohl das Zweimassenschwungrad als auch die verbleibenden Systembereiche der Kupplungsanordnung können dann im Wesentlichen von herkömmlichem Aufbau sein.

Eine Entlastung vor allem einer außerhalb des Gehäuses angeordneten Torsionsschwingungsdämpferanordnung von Kräften kann weiterhin dadurch erlangt werden, dass das Gehäuse eine Gehäusenabe umfasst, welche bezüglich des Antriebsorgans axial oder/und radial gelagert oder lagerbar ist.

Die vorliegende Erfindung wird nachfolgend mit Bezug auf die beiliegenden Zeichnungen detailliert erläutert. Es zeigt:
- Fig. 1: eine Längsschnittansicht einer Kupplungsanordnung;
- Fig. 2: eine Längsschnittansicht einer alternativen Ausgestaltungsform einer Kupplungsanordnung;
- Fig. 3: eine Längsschnittansicht einer weiteren alternativen Ausgestaltungsform einer Kupplungsanordnung.

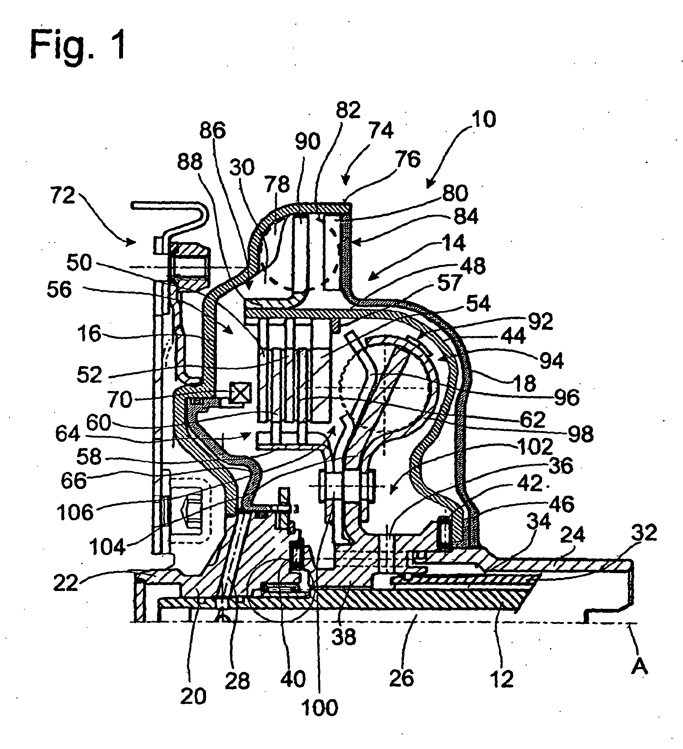

Die in Fig. 1 dargestellte Kupplungsanordnung 10 dient dazu, ein Drehmoment zwischen einem Antriebsorgan, beispielsweise einer nicht dargestellten Kurbelwelle einer Brennkraftmaschine, und einem Abtriebsorgan, beispielsweise einer Getriebeeingangswelle 12, zu übertragen. Die Kupplungsanordnung 10 ist als nasslaufende Kupplungsanordnung ausgebildet und umfasst ein Gehäuse 14, das im Wesentlichen mit zwei Gehäuseschalen 16 und 18 aufgebaut ist. Die antriebsseitig positionierte Gehäuseschale 16 ist radial innen beispielsweise durch Verschweißung mit einer Gehäusenabe 20 fest verbunden. Ein axialer Ansatz 22 dieser Gehäusenabe 20 kann in einer entsprechenden Aussparung einer Kurbelwelle oder dergleichen beispielsweise über ein Pilotlager axial oder/und radial abgestützt bzw. gelagert sein. Im radial äußeren Bereich sind die beiden Gehäuseschalen 16, 18 beispielsweise ebenfalls durch Verschweißung fest verbunden, und die abtriebsseitige Gehäuseschale 18 ist radial innen mit einem als Hohlwelle ausgebildeten Antriebsansatz 24 beispielsweise durch Verschweißung fest verbunden, welcher eine in einem Getriebe angeordnete Pumpe antreibt, über die Fluid, also beispielsweise Getriebeöl, durch eine zentrale Öffnung 26 in der Getriebeeingangswelle 12 und einen oder mehrere Kanäle 28 in der Gehäusenabe 20 in einen Innenraum 30 des Gehäuses 14 eingeleitet wird. Ferner wird Fluid über einen zwischen der Getriebeeingangswelle 12 und einer Stützwelle 32 gebildeten Zwischenraum 34 und über einen oder mehrere Kanäle 36 in einer Abtriebsnabe 38 in den Innenraum 30 eingeleitet bzw. von dort abgezogen. Diese Abtriebsnabe 38 ist durch entsprechende Verzahnungen mit der Getriebeeingangswelle 12 drehfest gekoppelt. Ferner ist die Abtriebsnabe 38 axial über jeweilige Lager 40, 42 bezüglich des Gehäuses 14, insbesondere bezüglich der Gehäusenabe 20 einerseits und der Gehäuseschale 18 andererseits, axial abgestützt. Dabei stützt sich die Abtriebsnabe 38 über das Lager 42 nicht unmittelbar an der Gehäuseschale 18 ab, sondern stützt sich am radial inneren Endbereich eines nachfolgend noch erläuternden ersten Reibelemententrägers 44 ab, welcher wiederum über ein Drehentkopplungslager 46, beispielsweise ausgebildet als Gleitlagerring, axial bezüglich der Gehäuseschale 18 und radial bezüglich des Antriebsansatzes 24 abgestützt ist.

Mit diesem ersten Reibelemententräger 44 sind in einem radial äußeren, im Wesentlichen zylindrisch ausgebildeten Abschnitt 48 Reibelemente 50, 52, 54 einer ersten Gruppe 56 von Reibelementen durch miteinander in Eingriff stehende Verzahnungen zur gemeinsamen Drehung um eine Drehachse A verbunden. Durch die spezielle Ausgestaltung dieser Verzahnungen sind die Reibelemente 50, 52, 54 jedoch axial bezüglich des ersten Reibelemententrägers 44 bewegbar. Das in der Fig. 1 am weitesten rechts, also abtriebsseitig positionierte Reibelement 54 ist über einen Sicherungsring 57 oder dergleichen axial bezüglich des Reibelemententrägers 44 abgestützt.

Ein radial von dem ersten Reibelemententräger 44 umgebener zweiter Reibelemententräger 58 trägt Reibelemente 60, 62 einer zweiten Gruppe 64 von Reibelementen. Die Reibelemente 60, 62 greifen zwischen die Reibelemente 50, 52, 54 der ersten Gruppe 56 ein und können mit diesen in Reibeingriff gebracht werden. Zu diesem Zwecke ist ein als Ringkolben ausgebildetes Anpresselement 66 vorgesehen, das bezüglich des Gehäuses 14 axial bewegbar gehalten ist, jedoch mit diesem Gehäuse 14 um die Drehachse A rotiert. Man erkennt, dass durch Erhöhung des Fluiddrucks im Bereich der Kanäle 28 entsprechend auch der Fluiddruck in dem zwischen dem Anpresselement 66 und der ersten Gehäuseschale 16 gebildeten Raum erhöht wird und somit das Anpresselement 66 in Richtung auf die beiden Gruppen 56 und 64 von Reibelementen zu bewegt wird. Das Anpresselement 66 beaufschlagt dabei das Reibelement 50 über ein Drehentkopplungslager 70, beispielsweise ein Wälzkörperlager oder ein Gleitlager, und presst somit die verschiedenen Reibelemente 50, 52, 54 bzw. 60, 62 in gegenseitigen Reibeingriff, wobei die axiale Abstützung über den Sicherungsring 57 erfolgt.

Im Drehmomentübertragungsweg zwischen einer an der Gehäuseschale 16 außen angebrachten und mit dem Antriebsorgan, also beispielsweise einer Kurbelwelle, fest zu verbindenden Kopplungsanordnung 72 und dem ersten Reibelemententräger 44 ist eine erste Torsionsschwingungsdämpferanordnung 74 angeordnet. Diese umfasst als Eingangsbereich 76 im Wesentlichen die radial äußeren Bereiche der beiden Gehäuseschalen 16, 18, an welchen jeweilige Abstützabschnitte 78, 80 für die Dämpferelemente 82 einer Dämpferelementenanordnung 84 dieser ersten Torsionsschwingungsdämpferanordnung 74 gebildet sind. An der Außenseite des ersten Reibelemententrägers 44 ist ein als Ausgangsbereich 86 wirksames Mitnehmerelement 88 beispielsweise durch Verschweißung festgelegt, welches mit nach radial außen greifenden Armabschnitten 90 zwischen die Abstützbereiche 78, 78 des Eingangsbereichs 76 und in Umfangsrichtung zwischen einzelne Dämpferelemente, also beispielsweise Federn oder Gruppen von Federn, eingreift. Die Dämpferelemente 82 stützen sich somit in Umfangsrichtung an den Abstützbereichen 78, 80 bzw. Armen 90 ab und ermöglichen aufgrund ihrer Umfangskompressibilität eine Relativdrehbewegung zwischen dem Eingangsbereich 76 und dem Ausgangsbereich 86. Dies bedeutet, dass auf das Gehäuse 14 sich unter der Kompression der Dämpferelemente 82 bezüglich des ersten Reibelemententrägers 44 bewegen kann. Treten im Einrückzustand der Kupplungsanordnung 10 Drehschwingungen auf, welche eine Umfangsrelativbewegung zwischen dem Gehäuse 14 und dem Reibelemententräger 44 und mithin auch dem Reibelement 50 bewirken, so führt dies auch zu einer Relativumfangsbewegung zwischen diesem Reibelement 50 und dem Anpresselement 66, was jedoch aufgrund des Bereitstellen des Drehentkopplungslagers 70 problemlos ermöglicht ist.

Im Drehübertragungsweg zwischen dem zweiten Reibelementträger 58 und der Abtriebsnabe 38 liegt eine zweite Torsionsschwingungsdämpferanordnung 92. Ein Eingangsbereich 94 derselben umfasst zwei Deckscheibenelemente 96, 98, welche in ihrem radial inneren Bereich durch Nietbolzen 100 oder dergleichen miteinander und auch mit dem zweiten Reibelemententräger 58 fest verbunden sind. Zwischen den beiden Deckscheibenelementen liegt ein im Wesentlichen den Ausgangsbereich 102 bereitstellendes Zentralscheibenelement 104. Auch am Zentralscheibenelement 104 sowie den Deckscheibenelementen 96, 98 sind Abstützbereiche vorhanden, an welchen die Dämpferelemente einer Dämpferelementenanordnung 106 der zweiten Torsionsschwingungsdämpferanordnung 92 in Umfangsrichtung abgestützt sind. Es ist somit auch eine Relativumfangsbewegung des zweiten Reibelemententrägers 58 bezüglich der Abtriebsnabe 38 und mithin auch der Getriebeeingangswelle 12 unter Kompression der Dämpferelemente der Dämpferelementenanordnung 106 ermöglicht, wobei bei dieser Relativumfangsbewegung die Nietbolzen 100 sich in langgestreckten Umfangsaussparungen im Zentralscheibenelement 104 bewegen. Auf diese Art und Weise ist gleichzeitig auch eine Drehwegbegrenzungsfunktion für die zweite Torsionsschwingungsdämpferanordnung 92 realisiert. Es sei weiterhin darauf hingewiesen, dass selbstverständlich das Zentralscheibenelement 104, so wie dargestellt, mit der Abtriebsnabe 38 integral ausgebildet sein kann, oder mit dieser durch Verschweißen oder dergleichen fest verbunden sein kann. Auch erkennt man, dass der Eingangsbereich 94 der zweiten Torsionsschwingungsdämpferanordnung 92 beispielsweise durch den radial inneren Endbereich des Deckscheibenelements 96 radial bezüglich des Ausgangsbereichs 102 durch Abstützung an der Abtriebsnabe 38 gelagert ist.

Durch das Eingliedern zweier Torsionsschwingungsdämpferanordnungen 74 und 92 in den Drehmomentübertragungsweg, und zwar einmal vor den Gruppen 56, 64 von Reibelementen und einmal nach den Gruppen 56, 64 von Reibelementen wird ein sehr gutes Schwingungsentkopplungsverhalten in einem Antriebsstrang erzielt. Da in jedem Falle auch in einer Startphase einer Brennkraftmaschine bei ausgerückter Kupplungsanordnung, also reibmäßig im Wesentlichen voneinander entkoppelten Gruppen 56, 64 von Reibelementen, die erste Torsionsschwingungsdämpferanordnung 74 wirksam ist, kann die Funktionalität eines Zweimassenschwungrads sichergestellt werden, wobei durch das Verbinden des Ausgangsbereichs 86 der ersten Torsionsschwingungsdämpferanordnung 74 mit dem ersten Reibelemententräger 44 bzw. der ersten Gruppe 56 von Reibelementen eine vergleichsweise große Masse am Ausgangsbereich sichergestellt ist. Ein Vorteil des Eingliederns beider Torsionsschwingungsdämpferanordnungen 74, 92 in den Innenvolumenbereich des Gehäuses 14 ist, dass beide Torsionsschwingungsdämpferanordnungen nasslaufend sind, also eine zusätzliche Schwingungsdämpfungsfunktionalität aufweisen und gleichzeitig auch geschmiert werden. Weiterhin ist ein direkter Antrieb der im Getriebe angeordneten Pumpe über den Antriebsansatz 24 und das Gehäuse 14 sichergestellt. Die durch das Einleiten von unter Druck stehendem Fluid in den Innenraum 30 entstehenden axialen Kräfte können vollständig innerhalb des Gehäuses aufgenommen werden, d.h. sie belasten keine der beiden Torsionsschwingungsdämpferanordnungen 74, 92.

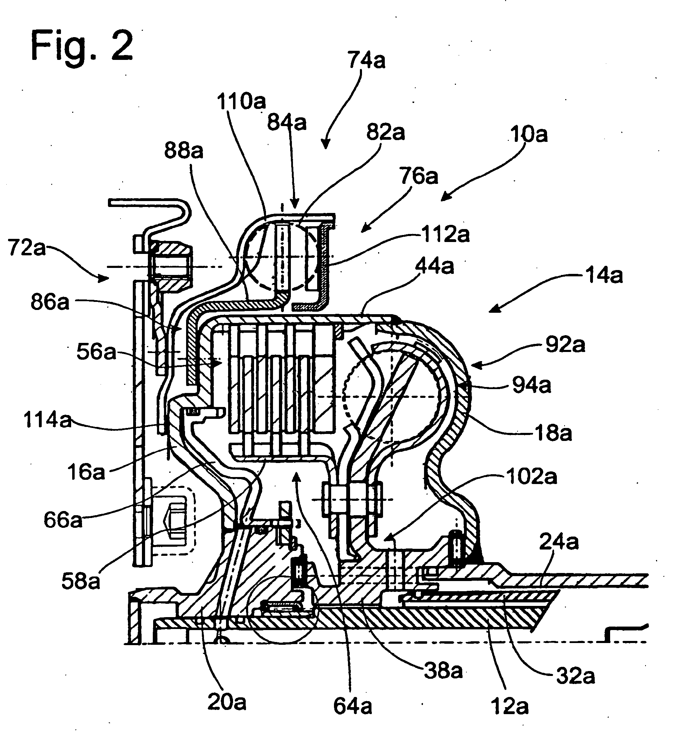

Eine alternative Ausgestaltungsform einer Kupplungsanordnung mit zwei Torsionsschwingungsdämpferanordnungen ist in Fig. 2 gezeigt. Komponenten, welche hinsichtlich Aufbau bzw. Funktion vorangehend beschriebenen Komponenten entsprechen, sind mit dem gleichen Bezugszeichen unter Hinzufügung eines Anhangs "a" bezeichnet. Es sei darauf hingewiesen, dass im Folgenden lediglich auf die zur vorangehend beschriebenen ersten Ausgestaltungsform bestehenden Unterschiede eingegangen wird.

Während bei der in Fig. 2 gezeigten Ausgestaltungsform vor allem der Aufbau der zweiten Torsionsschwingungsdämpferanordnung 92a in Verbindung mit dem zweiten Reibelemententräger 58a dem vorangehend Beschriebenen entspricht, erkennt man, dass der erste Reibelemententräger 44a nunmehr einen integralen Bestandteil der Gehäuseschale 16a bzw. des Gehäuses 14a bildet. Diese Gehäuseschale 16 weist also in ihrem radial äußeren und näherungsweise zylindrisch ausgestalteten Bereich eine Verzahnung auf, mit welcher die erste Gruppe 56a von Reibelementen in Eingriff steht. Da bei dieser Ausgestaltungsform also eine Relativumfangsbewegung zwischen dem ersten Reibelemententräger 44a und dem Gehäuse 14a und somit auch dem Anpresselement 66a nicht auftreten wird, kann das Anpresselement 66a die beiden Gruppen 56a, 64a von Reibelementen auch unmittelbar ohne der Zwischenlagerung eines Drehentkopplungslagers beaufschlagen.

Die erste Torsionsschwingungsdämpferanordnung 74a ist nunmehr außerhalb des Gehäuses 14a angeordnet. Zwei beispielsweise aus Blech-material gebildete Deckscheibenelemente 110a, 112a bilden im Wesentlichen den Eingangsbereich 76a der ersten Torsionsschwingungsdämpferanordnung 74a, wobei das antriebsseitig positionierte Deckscheibenelement 110a sich vergleichsweise weit nach radial innen erstreckt und sich bereichsweise radial mit der ersten Gehäuseschale 16a überlappt. Die Kopplungsanordnung 70a, über welche die drehfeste Anbindung an die Kurbelwelle oder ein sonstiges Antriebsorgan erfolgt, ist mit diesem Deckscheibenelement 110a fest verbunden. Das Mitnehmerelement 88a, welches im Wesentlichen den Ausgangsbereich 86a bildet, ist an die Außenseite des Gehäuses 14a, nämlich der ersten Gehäuseschale 16a, beispielsweise durch Verschweißung fest angebunden und greift mit seinem radial äußeren Bereich zwischen die beiden Deckscheibenelemente 110a, 112a ein, um auf diese Art und Weise die bei derartigen Torsionsschwingungsdämpfern bekannte Wechselwirkung mit den Dämpferelementen 82a der Dämpferelementenanordnung 84a zu erlangen.

Um bei dieser Ausgestaltungsform die erste Torsionsschwingungsdämpferanordnung 74a von dem bei Einleitung von Druckfluid in das Gehäuse 14a auftretenden Axialschubkräften zu entlasten, wirkt zwischen dem radial inneren Endbereich des Deckscheibenelements 110a und der ersten Gehäuseschale 16a ein beispielsweise als Tellerfeder ausgestaltetes Vorspannelement 114a. Durch dieses Vorspannelement 114a ist eine Kraftwirkung zwischen dem Eingangsbereich 76a und dem Ausgangsbereich 86a der ersten Torsionsschwingungsdämpferanordnung 74a vorgesehen, um sicherzustellen, dass auch bei auftretenden Axialschubkräften die beiden Bereiche immer in geeigneter Positionierung bezüglich einander angeordnet sind.

Auch bei der in Fig. 2 dargestellten Ausgestaltungsvariante sind also zwei seriell wirksame Torsionsschwingungsdämpferanordnungen 74a und 92a vorhanden. Da die erste Torsionsschwingungsdämpferanordnung 74a nicht in das Gehäuse 14a integriert ist, wird es möglich, nach Art eines Baukastensystems hier verschiedene Module miteinander zu koppeln, um beispielsweise auch eine Anpassung an verschiedene Antriebsstränge zu ermöglichen.

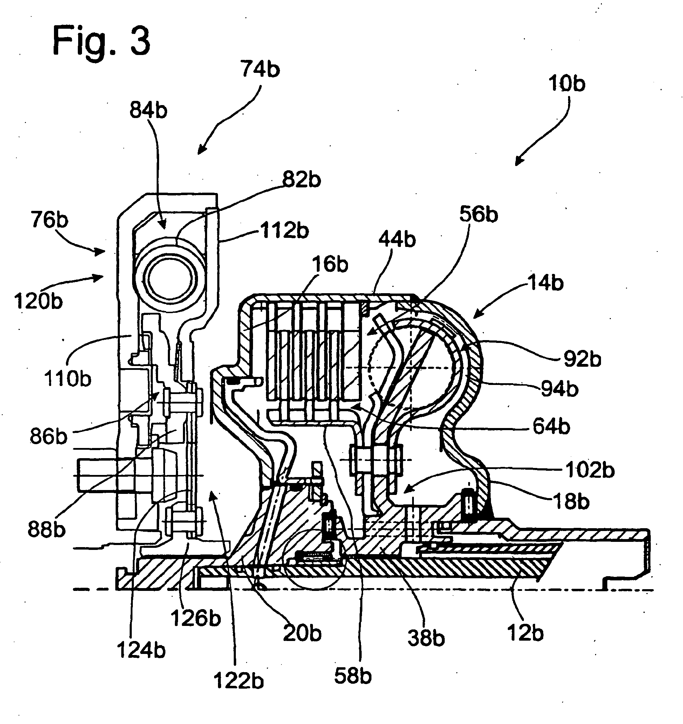

Diese Anpassbarkeit bzw. die Ausgestaltung mit Modulcharakter wird durch die in Fig. 3 dargestellte weitere Ausgestaltungsform noch verdeutlicht. Hier sind Komponenten, welche vorangehend beschriebenen Komponenten hinsichtlich Aufbau bzw. Funktion entsprechen, mit dem gleichen Bezugszeichen unter Hinzufügung des Anhangs "b" bezeichnet. Man erkennt hier, dass der das Gehäuse 14b und die darin aufgenommenen Systembereiche umfassende Modulabschnitt dem in Fig. 2 Gezeigten entspricht, während die erste Torsionsschwingungsdämpferanordnung 74b als im Wesentlichen herkömmlich ausgestaltetes Zweimassenschwungrad ausgebildet ist. Diese umfasst als Eingangsbereich 86b bzw. als Primärseite 120b zwei Deckscheibenelemente 110b, 112b, zwischen welche ein im Wesentlichen den Ausgangsbereich 86b bzw. die Sekundärseite 122b bereitstellendes Zentralscheibenelement bzw. Mitnehmerelement 88b eingreift. Im radial äußeren Bereich ist die an sich bekannte Wechselwirkung mit den Dämpferelementen 82b der Dämpferelementenanordnung 84b vorhanden. Das Mitnehmerelement 88b ist beispielsweise über Blattfederelemente 124b und einen radial innen damit gekoppelten Nabenbereich 126b in Drehmitnahmeeingriff mit der Gehäusenabe 20b des Gehäuses 14b zu können. An die Gehäusenabe 20b und den Nabenbereich 126b in Kämmeingriff stehende Verzahnungen vorgesehen sein.

Bei allen vorangehend beschriebenen Ausgestaltungsformen einer erfindungsgemäßen Kupplungsanordnung besteht der Vorteil, dass hiermit die zweite Torsionsschwingungsdämpferanordnung innerhalb des mit Fluid gefüllten Innenraums des Gehäuses angeordnet ist und somit als nasslaufende Dämpferanordnung wirksam sein kann. Bei Integration der ersten Torsionsschwingungsdämpferanordnung in das Gehäuse oder entsprechende Ausgestaltung derselben bei Anordnung außerhalb des Gehäuses kann auch diese eine nasslaufende Funktionalität aufweisen. Weiter besteht bei der erfindungsgemäßen Ausgestaltungsform dadurch, dass der Ausgangsbereich der ersten Torsionsschwingungsdämpferanordnung mit der ersten Gruppe von Reibelementen gekoppelt ist, die Möglichkeit, vor allem in der Startphase einer Brennkraftmaschine beim Hochdrehen auf Leerlaufdrehzahl eine zusätzliche Fluiddämpfungsfunktion mit einzuführen, die das Anregen von Resonanzschwingungen vor Erreichen der Leerlaufdrehzahl verhindert. Dazu kann durch das Ansteuern der Kupplungsanordnung 10 derart, dass die beiden Gruppen von Reibelementen in Reibeingriff gebracht werden und somit die ausgangsseitige Masse der ersten Torsionsschwingungsdämpferanordnung erhöht wird bzw. ein Schlupfmoment ermöglicht wird, eine weitere Dämpfungsfunktion vor allem in der Startphase ermöglicht werden.

## Patentansprüche

1. Kupplungsanordnung für den Antriebsstrang eines Fahrzeugs, umfassend ein Gehäuse (14; 14a; 14b) mit einem Innenraum (30), eine erste Gruppe (56; 56a; 56b) von Reibelementen, welche über einen ersten Reibelemententräger (44; 44a; 44b) mit einem Antriebsorgan zur Drehung um eine Drehachse (A) zu koppeln sind, eine zweite Gruppe (64; 64a; 64b) von Reibelementen, welche über einen zweiten Reibelemententräger (58; 58a; 58b) mit einem Abtriebsorgan (12; 12a; 12b) zu koppeln sind und durch eine Anpressanordnung (66; 66a; 66b) in Reibeingriff mit den Reibelementen der ersten Gruppe (56; 56a; 56b) von Reibelementen bringbar sind, ferner umfassend im Drehmomentübertragungsweg zwischen dem ersten Reibelemententräger (44; 44a; 44b) und dem damit zu koppelnden Antriebsorgan eine erste Torsionsschwingungsdämpferanordnung (74; 74a; 74b),
**dadurch gekennzeichnet,**
**dass** im Drehmomentübertragungsweg zwischen dem zweiten Reibelemententräger (58; 58a; 58b) und dem damit zur koppelnden Abtriebsorgan (12; 12a; 12b) eine zweite Torsionsschwingungsdämpferanordnung (92; 92a; 92b) vorgesehen ist, die innerhalb des Gehäuses (14; 14a; 14b) angeordnet ist, und dass der innenraum (30) des Gehäuses (14; 14a; 14b) mit Fluid gefüllt ist, wobei durch Erhöhung des Fluiddrucks in einem Raum, der sich zwischen dem die erste Gruppe (56; 56a; 56b) von Reibelementen mit der zweiten Gruppe (64; 64a; 64b) von Reibelementen in Reibverbindung bringbaren Anpresselement (66) und einer Gehäuseschale (16) des Gehäuses (14; 14a; 14b) befindet, das Anpresselement (66) in Richtung auf die beiden Gruppen (56) und (64) von Reibelementen zu bewegt wird.

2. Kupplungsanordnung nach Anspruch 1,
**dadurch gekennzeichnet, dass** jede der Torsionsschwingungsdämpferanordnungen (74; 92; 74a, 92a; 74b, 92b) einen Eingangsbereich (76, 94; 76a, 94a; 76b, 94b) und einen über eine Dämpferelementenanordnung (84, 106; 84a, 106a; 84b, 106b) damit zur Drehmomentübertragung gekoppelten Ausgangsbereich (84, 102; 84a, 102a; 84b, 102b) umfasst.

3. Kupplungsanordnung nach Anspruch 1 oder 2,
**dadurch gekennzeichnet, dass** der Eingangsbereich (94; 94a, 94b) der zweiten Torsionsschwingungsdämpferanordnung (92; 92a; 92b) den zweiten Reibbelagträger (58; 58a; 58b) umfasst oder damit verbunden ist und der Ausgangsbereich (102; 102a; 102b) der zweiten Torsionsschwingungsdämpferanordnung (92; 92a; 92b) eine Nabe (38; 38a; 38b) zur Kopplung mit dem Abtriebsorgan (12; 12a; 12b) umfasst oder damit verbunden ist.

4. Kupplungsanordnung nach Anspruch 2 oder Anspruch 3, sofern auf Anspruch 2 rückbezogen,
**dadurch gekennzeichnet, dass** die Dämpferelementenanordnung (84) der ersten Torsionsschwingungsdämpferanordnung (74) innerhalb des Gehäuses (14) angeordnet ist.

5. Kupplungsanordnung nach Anspruch 4,
**dadurch gekennzeichnet, dass** das Gehäuse (14) im Wesentlichen den Eingangsbereich (76) der ersten Torsionsschwingungsdämpferanordnung (74) bildet.

6. Kupplungsanordnung nach Anspruch 4 oder 5,
**dadurch gekennzeichnet, dass** der erste Reibelemententräger (44) in dem Gehäuse (14) bezüglich diesem um die Drehachse (A) drehbar angeordnet ist.

7. Kupplungsanordnung nach einem der Ansprüche 4 bis 6,
**dadurch gekennzeichnet, dass** der Ausgangsbereich (86) der ersten Torsionsschwingungsdämpferanordnung (74) den ersten Reibelemententräger (44) umfasst oder damit verbunden ist.

8. Kupplungsanordnung nach einem der Ansprüche 4 bis 7,
**dadurch gekennzeichnet, dass** die Anpressanordnung (66) ein in dem Gehäuse (14) in Richtung der Drehachse (A) verschiebbar angeordnetes und mit dem Gehäuse (14) um die Drehachse (A) drehbares Anpresselement (66) umfasst, welches die Reibelemente der ersten Gruppe (56) von Reibelementen und die Reibelemente der zweiten Gruppe (64) von Reibelementen über ein Drehentkopplungslager (70) beaufschlagt.

9. Kupplungsanordnung nach einem der Ansprüche 1 bis 3,
**dadurch gekennzeichnet, dass** die Dämpferelementenanordnung (84a; 84b) der ersten Torsionsschwingungsdämpferanordnung (74a; 74b) außerhalb des Gehäuses (14a; 14b) angeordnet ist.

10. Kupplungsanordnung nach Anspruch 9,
**dadurch gekennzeichnet, dass** der Eingangsbereich (76a) der ersten Torsionsschwingungsdämpferanordnung (74a) mit dem Antriebsorgan über eine scheibenartige Kopplungsänordnung (72a) zu koppeln ist.

11. Kupplungsanordnung nach Anspruch 9 oder 10,
**dadurch gekennzeichnet, dass** der Ausgangsbereich (86a) der ersten Torsionsschwingungsdämpferanordnung (74a) das Gehäuse (14a) umfasst oder damit verbunden ist.

12. Kupplungsanordnung nach einem der Ansprüche 9 bis 11,
**dadurch gekennzeichnet, dass** zwischen dem Eingangsbereich (76a) der ersten Torsionsschwingungsdämpferanordnung (74a) und dem Ausgangsbereich (86a) der ersten Torsionsschwingungsdämpferanordnung (74a) oder/und dem Gehäuse (14a) ein im Wesentlichen in axialer Richtung wirksames Vorspannelement (114a) angeordnet ist.

13. Kupplungsanordnung nach einem der Ansprüche 9 bis 12,
**dadurch gekennzeichnet, dass** das Gehäuse (14a) den ersten Reibelemententräger (44a) bildet.

14. Kupplungsanordnung nach Anspruch 9,
**dadurch gekennzeichnet, dass** die erste Torsionsschwingungsdämpferanordnung (74b) ein Zweimassenschwungrad umfasst mit einer mit dem Antriebsorgan zu koppelnden Primärseite (120b) und einer mit dem Gehäuse (14b) verbundenen Sekundärseite (122b).

15. Kupplungsanordnung nach einem der Ansprüche 1 bis 14,
**dadurch gekennzeichnet, dass** das Gehäuse (14; 14a; 14b) eine Gehäusenabe (20; 20a; 20b) umfasst, welche bezüglich des Antriebsorgans axial oder/und radial gelagert oder lagerbar ist.

## Claims

1. Clutch arrangement for the drivetrain of a vehicle, comprising a housing (14; 14a; 14b) with an interior space (30); a first group (56; 56a; 56b) of friction elements which are to be coupled by means of a first friction element carrier (44; 44a; 44b) to a drive input element for rotation about a rotational axis (A); a second group (64; 64a; 64b) of friction elements which are to be coupled by means of a second friction element carrier (58; 58a; 58b) to a drive output element (12; 12a; 12b) and which, by means of a pressing arrangement (66; 66a; 66b), can be placed in frictional engagement with the friction elements of the first group (56; 56a; 56b) of friction elements; and also comprising a first torsional vibration damper arrangement (74; 74a; 74b) in the torque transmission path between the first friction element carrier (44; 44a; 44b) and the drive input element which is to be coupled thereto,
**characterized**
**in that** a second torsional vibration damper arrangement (92; 92a; 92b), which is arranged within the housing (14; 14a; 14b), is provided in the torque transmission path between the second friction element carrier (58; 58a; 58b) and the drive output element (12; 12a; 12b) which is to be coupled thereto, and in that the interior space (30) of the housing (14; 14a; 14b) is filled with fluid, wherein by increasing the fluid pressure in a chamber which is situated between the pressing element (66), which places the first group (56; 56a; 56b) of friction elements in frictional engagement with the second group (64; 64a; 64b) of friction elements, and a housing shell (16) of the housing (14; 14a; 14b), the pressing element (66) is moved in the direction of the two groups (56) and (64) of friction elements.

2. Clutch arrangement according to Claim 1,
**characterized in that** each of the torsional vibration damper arrangements (74, 92; 74a, 92a; 74b, 92b) comprises an input region (76, 94; 76a, 94a; 76b, 94b) and an output region (84, 102; 84a, 102a; 84b, 102b) which is coupled thereto by means of a damper element arrangement (84, 106; 84a, 106a; 84b, 106b) for torque transmission.

3. Clutch arrangement according to Claim 1 or 2,
**characterized in that** the input region (94; 94a, 94b) of the second torsional vibration damper arrangement (92; 92a; 92b) comprises or is connected to the second friction lining carrier (58; 58a; 58b), and the output region (102; 102a; 102b) of the second torsional vibration damper arrangement (92; 92a; 92b) comprises or is connected to a hub (38; 38a; 38b) for coupling to the drive output element (12; 12a; 12b).

4. Clutch arrangement according to Claim 2 or Claim 3 where referred back to Claim 2,
**characterized in that** the damper element arrangement (84) of the first torsional vibration damper arrangement (74) is arranged within the housing (14).

5. Clutch arrangement according to Claim 4,
**characterized in that** the housing (14) substantially forms the input region (76) of the first torsional vibration damper arrangement (74).

6. Clutch arrangement according to Claim 4 or 5,
**characterized in that** the first friction element carrier (44) is arranged in the housing (14) so as to be rotatable relative to the latter about the rotational axis (A).

7. Clutch arrangement according to one of Claims 4 to 6, **characterized in that** the output region (86) of the first torsional vibration damper arrangement (74) comprises or is connected to the first friction element carrier (44).

8. Clutch arrangement according to one of Claims 4 to 7,
**characterized in that** the pressing arrangement (66) comprises a pressing element (66) which is arranged in the housing (14) so as to be movable in the direction of the rotational axis (A) and which is rotatable with the housing (14) about the rotational axis (A) and which acts on the friction elements of the first group (56) of friction elements and the friction elements of the second group (64) of friction elements via a rotary decoupling bearing (70).

9. Clutch arrangement according to one of Claims 1 to 3,
**characterized in that** the damper element arrangement (84a; 84b) of the first torsional vibration damper arrangement (74a; 74b) is arranged outside the housing (14a; 14b).

10. Clutch arrangement according to Claim 9,
**characterized in that** the input region (76a) of the first torsional vibration damper arrangement (74a) is to be coupled to the drive input element by means of a disc-like coupling arrangement (72a).

11. Clutch arrangement according to Claim 9 or 10,
**characterized in that** the output region (86a) of the first torsional vibration damper arrangement (74a) comprises or is connected to the housing (14a).

12. Clutch arrangement according to one of Claims 9 to 11,
**characterized in that** a preload element (114a) which acts substantially in the axial direction is arranged between the input region (76a) of the first torsional vibration damper arrangement (74a) and the output region (86a) of the first torsional vibration damper arrangement (74a) and/or the housing (14a).

13. Clutch arrangement according to one of Claims 9 to 12,
**characterized in that** the housing (14a) forms the first friction element carrier (44a).

14. Clutch arrangement according to Claim 9,
**characterized in that** the first torsional vibration damper arrangement (74b) comprises a dual-mass flywheel with a primary side (120b), which is to be coupled to the drive input element, and a secondary side (122b), which is connected to the housing (14b).

15. Clutch arrangement according to one of Claims 1 to 14,
**characterized in that** the housing (14; 14a; 14b) comprises a housing hub (20; 20a; 20b) which is or can be mounted axially and/or radially with respect to the drive input element.

## Revendications

1. Dispositif d'embrayage pour la chaîne de transmission d'un véhicule, comprenant un boîtier (14 ; 14a ; 14b) avec un espace interne (30), un premier groupe (56 ; 56a ; 56b) d'éléments de friction qui peuvent être accouplés par le biais d'un premier support d'éléments de friction (44 ; 44a ; 44b) à un organe d'entraînement en vue de tourner autour d'un axe de rotation (A), un deuxième groupe (64 ; 64a ; 64b) d'éléments de friction qui peuvent être accouplés par le biais d'un deuxième support d'éléments de friction (58 ; 58a ; 58b) à un organe de sortie (12 ; 12a ; 12b) et qui peuvent être amenés par un agencement de pressage (66 ; 66a ; 66b) en engagement de friction avec les éléments de friction du premier groupe (56 ; 56a ; 56b) d'éléments de friction, et comprenant en outre dans la voie de transmission de couple entre le premier support d'éléments de friction (44 ; 44a ; 44b) et l'organe d'entraînement à accoupler avec celui-ci, un premier agencement d'amortisseur d'oscillations de torsion (74 ; 74a ; 74b),
**caractérisé en ce que**
dans la voie de transmission de couple entre le deuxième support d'éléments de friction (58 ; 58a ; 58b) et l'organe de sortie (12 ; 12a ; 12b) à accoupler avec lui, est prévu un deuxième agencement d'amortisseur d'oscillations de torsion (92 ; 92a ; 92b), qui est disposé à l'intérieur du boîtier (14 ; 14a ; 14b) et **en ce que** l'espace interne (30) du boîtier (14 ; 14a ; 14b) est rempli de fluide, l'augmentation de la pression de fluide dans un espace qui se trouve entre l'élément de pression (66) pouvant amener le premier groupe (56, 56a; 56b) d'éléments de friction en liaison de friction avec le deuxième groupe (64; 64a ; 64b) d'éléments de friction et une coque de boîtier (16) du boîtier (14 ; 14a ; 14b), permettant de déplacer l'élément de pression (66) dans la direction des deux groupes (56) et (64) d'éléments de friction.

2. Dispositif d'embrayage selon la revendication 1, **caractérisé en ce que** chacun des agencements d'amortisseur d'oscillations de torsion (74, 92 ; 74a, 92a ; 74b, 92b) comprend une région d'entrée (76, 94 ; 76a, 94a ; 76b, 94b) et une région de sortie (84, 102 ; 84a, 102a ; 84b, 102b) accouplée à celle-ci par le biais d'un agencement d'éléments amortisseurs (84, 106 ; 84a, 106a ; 84b, 106b) pour transmettre le couple.

3. Dispositif d'embrayage selon la revendication 1 ou 2, **caractérisé en ce que** la région d'entrée (94 ; 94a ; 94b) du deuxième agencement d'amortisseur d'oscillations de torsion (92 ; 92a ; 92b) comprend le deuxième support de garnitures de friction (58 ; 58a ; 58b) ou est connectée à celui-ci, et la région de sortie (102 ; 102a ; 102b) du deuxième agencement d'amortisseur d'oscillations de torsion (92 ; 92a ; 92b) comprend un moyeu (38 ; 38a ; 38b) pour l'accouplement avec l'organe de sortie (12 ; 12a ; 12b) ou est connectée à celui-ci.

4. Dispositif d'embrayage selon la revendication 2 ou la revendication 3 dans la mesure où elle se rapporte à la revendication 2, **caractérisé en ce que** l'agencement d'éléments amortisseurs (84) du premier agencement d'amortisseur d'oscillations de torsion (74) est disposé à l'intérieur du boîtier (14).

5. Dispositif d'embrayage selon la revendication 4, **caractérisé en ce que** le boîtier (14) forme essentiellement la région d'entrée (76) du premier agencement d'amortisseur d'oscillations de torsion (74).

6. Dispositif d'embrayage selon la revendication 4 ou 5, **caractérisé en ce que** le premier support d'éléments de friction (44) est disposé dans le boîtier (14) de manière à pouvoir tourner par rapport à celui-ci autour de l'axe de rotation (A).

7. Dispositif d'embrayage selon l'une quelconque des revendications 4 à 6, **caractérisé en ce que** la région de sortie (86) du premier agencement d'amortisseur d'oscillations de torsion (74) comprend le premier support d'éléments de friction (44) ou est connectée à celui-ci.

8. Dispositif d'embrayage selon l'une quelconque des revendications 4 à 7, **caractérisé en ce que** l'agencement de pression (66) comprend un élément de pression (66) disposé de manière déplaçable dans le boîtier (14) dans la direction de l'axe de rotation (A) et pouvant tourner avec le boîtier (14) autour de l'axe de rotation (A), ledit élément de pression sollicitant les éléments de friction du premier groupe (56) d'éléments de friction et les éléments de friction du deuxième groupe (64) d'éléments de friction par le biais d'un palier de découplage rotatif (70).

9. Dispositif d'embrayage selon l'une quelconque des revendications 1 à 3, **caractérisé en ce que** l'agencement d'éléments amortisseurs (84a ; 84b) du premier agencement d'amortisseur d'oscillations de torsion (74a ; 74b) est disposé en dehors du boîtier (14a ; 14b).

10. Dispositif d'embrayage selon la revendication 9, **caractérisé en ce que** la région d'entrée (76a) du premier agencement d'amortisseur d'oscillations de torsion (74a) doit être accouplée à l'organe d'entraînement par le biais d'un agencement d'accouplement (72a) de type disque.

11. Dispositif d'embrayage selon la revendication 9 ou 10, **caractérisé en ce que** la région de sortie (86a) du premier agencement d'amortisseur d'oscillations de torsion (74a) comprend le boîtier (14a) ou est connectée à celui-ci.

12. Dispositif d'embrayage selon l'une quelconque des revendications 9 à 11, **caractérisé en ce qu'**entre la région d'entrée (76a) du premier agencement d'amortisseur d'oscillations de torsion (74a) et la région de sortie (86a) du premier agencement d'amortisseur d'oscillations de torsion (74a) et/ou le boîtier (14a) est disposé un élément de précontrainte (114a) agissant essentiellement dans la direction axiale.

13. Dispositif d'embrayage selon l'une quelconque des revendications 9 à 12, **caractérisé en ce que** le boîtier (14a) forme le premier support d'éléments de friction (44a).

14. Dispositif d'embrayage selon la revendication 9, **caractérisé en ce que** le premier agencement d'amortisseur d'oscillations de torsion (74b) comprend une roue volante à deux masses avec un côté primaire (120b) à connecter à l'organe d'entraînement et avec un côté secondaire (122b) connecté au boîtier (14b).

15. Dispositif d'embrayage selon l'une quelconque des revendications 1 à 14, **caractérisé en ce que** le boîtier (14 ; 14a ; 14b) comprend un moyeu de boîtier (20 ; 20a ; 20b) qui est monté ou peut être monté axialement et/ou radialement par rapport à l'organe d'entraînement.
